# DEMANDE DE BREVET EUROPEEN

(11) **EP 2 312 137 A2**
(43) Date de publication de la demande: **20.04.2011**
(21) Numéro de dépôt: 10171028.3
(22) Date de dépôt: 28.07.2010
(51) Int. Cl.: F01N 11/00

(54) **Procédé de diagnostic d'une anomalie dans une ligne d'échappement d'un moteur a combustion équipé d'un filtre a particules**

(30) Priorité: 25.09.2009 FR 0956621
(71) Demandeur: Peugeot Citroën Automobiles SA, 78140 Vélizy-Villacoublay (FR)
(72) Inventeur: De La Follye De Joux, Charles-Antoine, 75017 Paris (FR)

(57) **Abrégé**

L'invention porte sur un procédé de diagnostic d'une anomalie dans une ligne d'échappement d'un moteur à combustion équipé d'un filtre à particules, dans lequel :
• on détermine, sur une période donnée ou un kilométrage donné, un premier paramètre (P1) représentatif du caractère favorable des conditions de fonctionnement du moteur pour la régénération du filtre
• on détermine, sur la même période donnée ou le même kilométrage donné, un second paramètre (P2), représentatif de l'occurrence de phases de fonctionnement du moteur alors que le filtre est encrassé ;

et **caractérisé en ce qu**'on conclut à une anomalie si l'on constate que le second paramètre (P2) est supérieur seuil prédéfini alors que les conditions de fonctionnement du moteur sont favorables pour la régénération du filtre.

## Description

L'invention porte sur le système de traitement des gaz d'échappement d'un moteur à combustion, et plus particulièrement l'évaluation du niveau d'émission de particules d'un tel moteur et le diagnostic d'une dérive des émissions de particules ou une défaillance de leur système de traitement.

Généralement, et en particulier dans les moteurs de type Diesel, on utilise la teneur en oxygène des gaz d'échappement, obtenue à l'aide d'une sonde à oxygène (dite sonde 02) pour déterminer le niveau des émissions de particules par le moteur et détecter certaines défaillances dans le système de traitement des gaz d'échappement. Cependant, un tel système est couteux, et, par ailleurs, peut connaitre des défaillances.

C'est pourquoi il peut être souhaitable de disposer d'un moyen permettant de se passer de la sonde à oxygène pour déterminer le niveau d'émission de particules et en détecter les dérives, que ce moyen vienne en remplacement ou en complément du dispositif actuel.

Les systèmes de traitement des gaz d'échappement d'un moteur Diesel comportent fréquemment un filtre à particules de suies, dont le rôle est de piéger les particules lors du fonctionnement du moteur. Dans une application automobile classique, ce filtre est régénéré périodiquement. La régénération consiste essentiellement en une élévation de la température des gaz d'échappement telle que les suies piégées par le filtre sont détruites pas oxydation. Cette régénération est déclenchée lorsque le niveau de chargement du filtre en suie est supérieur à un seuil donné, et que les conditions d'utilisation du moteur sont propices au déclenchement d'une régénération (niveau de charge du moteur suffisant).

La masse de suie contenue dans le filtre peut être estimée par l'évaluation de la contrepression générée par le filtre dans la ligne d'échappement, déterminée à l'aide de capteurs de pression placés respectivement en entrée et en sortie du filtre à particules. Il s'agit alors d'une évaluation dite en boucle fermée.

On peut également évaluer cette masse de suie par un contrôle en boucle ouverte. Il s'agit alors d'estimer le temps passé sur chaque point de fonctionnement du moteur, étant entendu que l'on dispose préalablement d'une cartographie des émissions de suie du moteur en fonction du point de fonctionnement.

Enfin, des capteurs de suies commencent à être employés, permettant une mesure directe de la quantité de particules présente dans les gaz d'échappement. L'intégration de cette quantité mesurée permet la détermination e la charge du filtre.

On connait au travers de la demande de brevet US2008196389 un procédé permettant la détection de certaines anomalies, à savoir une dérive des émissions de particules par le moteur, en analysant la fréquence des régénérations du filtre. Ce procédé est cependant inefficace dans de nombreuses situations. En effet, si un véhicule est utilisé exclusivement dans des conditions de roulage à faibles charge, ou sur des fortes charges pendant des durées très courtes, aucune régénération du filtre ne pourra être entièrement menée. Il en résulte une succession de tentatives infructueuse de régénérations, qui sont interprétées comme une fréquence élevée de régénération. Cette information peut être interprétée comme une dérive des émissions de particules, alors qu'un simple roulage à forte charge ou une maintenance préventive serait suffisant.

Par ailleurs, dans les applications automobiles, il est possible de prédire probabilité de réussite d'une régénération, selon des informations statistiques de l'usage fait du véhicule. Typiquement, on peut construire une information statistique sur l'étude des vitesses moyennes du véhicule lors de son utilisation. Cette information permet de moduler la fréquence des régénérations du filtre. En effet, il est important de ne pas multiplier les causes d'échec de régénération dues aux conditions de roulage. Ainsi, lorsque cette information suggère qu'un utilisateur roule fréquemment à des vitesses élevées, les conditions de roulage sont favorables au bon déroulement de la régénération.

On peut nommer cette information statistique « capacité à régénérer ». Un moyen simple de la construire est de calculer la vitesse moyenne du véhicule sur les 100 derniers kilomètres parcourus.

D'autres modèles plus évolués permettent bien évidemment de traduire plus finement cette information, qui traduit la probabilité à venir d'être dans des conditions de roulage favorables à la régénération du filtre à particules. Il est par exemple possible de créer une fonction présentant des seuils non linéaires de vitesse moyenne sur un nombre de kilomètres donné, pour traduire l'habitude de roulage des utilisateurs du véhicule sous la forme d'un pourcentage de chance de régénérer le filtre.

Dans l'invention, la combinaison des deux informations disponibles, à savoir l'évolution de la charge en suie (mesurée en boucle fermée) et la « capacité à régénérer » (par exemple la vitesse moyenne sur une distance ou une durée déterminée) permet la résolution de la problématique de la détermination du niveau d'émission du moteur et la détection de l'origine de certaines défaillances du système de traitement des gaz d'échappement.

Plus précisément, l'invention porte sur un procédé de diagnostic d'une anomalie dans une ligne d'échappement d'un moteur à combustion équipé d'un filtre à particules, dans lequel :
- on détermine, sur une période donnée ou un kilométrage donné, un premier paramètre représentatif du caractère favorable des conditions de fonctionnement du moteur pour la régénération du filtre
- on détermine, sur la même période donnée ou le même kilométrage donné, un second paramètre, représentatif de l'occurrence de phases de fonctionnement du moteur alors que le filtre est encrassé ;
et dans lequel on conclut à une anomalie si l'on constate que le second paramètre est supérieur seuil prédéfini alors que les conditions de fonctionnement du moteur sont favorables pour la régénération du filtre. L'anomalie à laquelle on conclut correspond généralement à une dérive des émissions de particules par le moteur, ou à une défaillance du dispositif de régénération du filtre, par exemple du dispositif d'additivation du carburant dans le cadre d'un filtre à particules mettant en jeu un tel additif (filtre dit « additivé »). Par la mise en oeuvre de l'invention, et dans la mesure où l'on s'assure par analyse du premier paramètre que les conditions de fonctionnement du moteur sont favorables pour la régénération du filtre, on ne conclut pas à une anomalie quand seuls les paramètres de roulage du véhicule équipé du filtre sont défavorables à une bonne régénération du filtre à particules (cas de figure de roulages exclusivement urbains, par exemple).

Dans une variante de l'invention, le second paramètre est le nombre de régénérations déclenchées alors le filtre est encrassé. En effet, un nombre important de régénération déclenchées, c'est-à-dire pilotées par le contrôle moteur ou éventuellement spontanément déclenchées par les conditions physico-chimiques présentes dans la ligne d'échappement (température élevée et concentration en oxygène telles qu'une combustion des suies doit s'engager), alors même que les conditions de fonctionnement du moteur sont favorables à la régénération du filtre (par exemple car la charge moteur reste suffisamment élevée) témoigne du fait que les régénérations déclenchées sont partielles, ou bien que le filtre se remplit anormalement vite.

Dans une variante de l'invention, le second paramètre est le temps passé alors que le filtre est encrassé. Le fait de rester longtemps avec un filtre encrassé, c'est-à-dire présentant une charge supérieure ou égale à une charge en suie prédéfinie, alors même que les conditions de fonctionnement du moteur sont favorables à la régénération du filtre témoigne du fait que les régénérations déclenchées sont partielles, ou bien que le filtre se remplit anormalement vite.

Dans une variante de l'invention, le premier paramètre est lié à la vitesse moyenne d'un véhicule auquel le procédé est appliqué. En effet, la température des gaz d'échappement est liée à la charge du moteur, qui dans une application automobile, est généralement corrélée à la vitesse du véhicule. Une vitesse élevée pendant une durée ou une distance suffisante (ce qui entraine généralement une vitesse moyenne élevée) est donc favorable à la régénération du filtre à particules.

Dans une variante de l'invention, le premier paramètre est lié à la charge moyenne du moteur. En effet, la température des gaz d'échappement en sortie du moteur est directement liée à la charge du moteur. Une charge du moteur importante est donc favorable à la régénération du filtre à particules.

L'invention porte également sur un dispositif de contrôle commande d'un moteur à combustion interne, présentant des moyens de mise en ouvre d'un procédé selon l'invention. Il peut s'agir d'une carte ou d'un boîtier électronique indépendant ou intégré au reste du contrôle commande du moteur à combustion.

L'invention est décrite plus en détail et en référence à la figure unique présentant schématiquement un mode de réalisation.

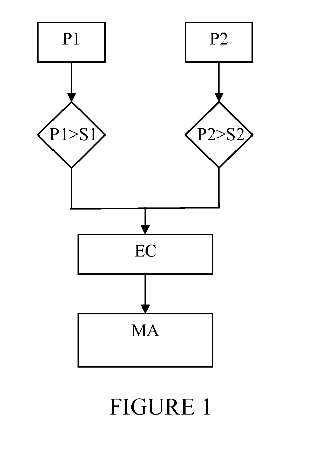

La figure 1 présente, sous la forme d'un logigramme, une variante d'un procédé selon l'invention.

Dans une première étape du procédé, on évalue un premier paramètre P1 de fonctionnement d'un moteur à combustion équipé d'un filtre à particules. Le premier paramètre P1 est représentatif du caractère favorable des conditions de fonctionnement du moteur vis à vis de la régénération du filtre. Ce premier paramètre P1, que l'on peut nommer « capacité à régénérer » peut correspondre à la vitesse moyenne du véhicule (ou la charge moyenne du moteur) calculée pendant une période ou un kilométrage donné. Il peut également correspondre à une fonction, éventuellement non linéaire, de cette vitesse ou de cette charge moyenne. On peut, uniquement à titre d'exemple, poser la loi suivante :
- Si la vitesse moyenne sur les 100 derniers kilomètres parcourus est inférieure à 15km/h, le roulage est défavorable à la régénération, le premier paramètre P1 (capacité à régénérer) est fixé à 10%
- Si la vitesse moyenne sur les 100 derniers kilomètres parcourus est comprise entre 15km/h et 30km/h, le premier paramètre est de 40%
- Si la vitesse moyenne sur les 100 derniers kilomètres parcourus est comprise entre 30km/h et 50km/h, le roulage habituel du véhicule est favorable à la régénération du filtre, le premier paramètre est de 80%
- Si la vitesse moyenne sur les 100 derniers kilomètres parcourus est supérieur à 50km/h, le roulage habituel du véhicule est très favorable à la régénération du filtre, le premier paramètre est de 90%

Dans une étape concomitante à la première étape, on évalue un second paramètre P2, représentatif de l'occurrence de phases de fonctionnement du moteur alors que le filtre est encrassé. On entend par filtre encrassé, un filtre qui présente une charge en particules supérieure à un niveau prédéterminé. Ce second paramètre P2, peut être la somme pendant une période ou un kilométrage donné du nombre de régénérations déclenchées alors que la charge du filtre est encrassé. Dans une autre variante de l'invention, il peut s'agir du temps passé par le filtre au dessus du niveau de charge prédéterminé tandis que le moteur est en fonctionnement, et pendant une période ou un kilométrage donné. Il s'agit bien évidemment de la même période, ou du même kilométrage que pour l'évaluation du premier paramètre P1.

On compare le premier paramètre P1 à un premier seuil S1, et le second paramètre P2 à un second seuil S2.

Si le paramètre P1 est supérieur au premier seuil S1 et le second paramètre P2 est supérieur au second seuil S2, alors on conclut, dans une étape de conclusion EC à une anomalie, qui peut correspondre à une dérive des émissions de particules du moteur à combustion ou à une défaillance du dispositif d'additivation du carburant.

Dans la variante de l'invention ici représentée, on avertit alors l'utilisateur du besoin d'une maintenance anticipé, dans une étape d'alerte MA.

L'intérêt de l'invention est double. Elle peut permettre de :
- construire une information pour réaliser de la maintenance préventive sur le système d'injection, la boucle d'air et le système d'additivation
- supprimer la sonde à oxygène, voire le capteur suie pour EOBD (dispositif de diagnostic embarqué) et du capteur à oxydes d'azotes (NOx) sans modification des prestations du système d'injection du moteur.

## Revendications

1. Procédé de diagnostic d'une anomalie dans une ligne d'échappement d'un moteur à combustion équipé d'un filtre à particules, dans lequel :
• on détermine, sur une période donnée ou un kilométrage donné, un premier paramètre (P1) représentatif du caractère favorable des conditions de fonctionnement du moteur pour la régénération du filtre
• on détermine, sur la même période donnée ou le même kilométrage donné, un second paramètre (P2), représentatif de l'occurrence de phases de fonctionnement du moteur alors que le filtre est encrassé ;
et **caractérisé en ce qu'**on conclut à une anomalie si l'on constate que le second paramètre (P2) est supérieur seuil prédéfini alors que les conditions de fonctionnement du moteur sont favorables pour la régénération du filtre.

2. Procédé selon la revendication 1, **caractérisé en ce que** le second paramètre (P2) est le nombre de régénérations déclenchées alors le filtre est encrassé.

3. Procédé selon la revendication 1, **caractérisé en ce que** le second paramètre (P2) est le temps passé alors que le filtre est encrassé.

4. Procédé selon l'une quelconque des revendications précédentes, **caractérisé en ce que** le premier paramètre (P1) est lié à la vitesse moyenne d'un véhicule auquel le procédé est appliqué.

5. Procédé selon l'une quelconque des revendications 1 à 3, **caractérisé en ce que** le premier paramètre (P1) est lié à la charge moyenne du moteur.

6. Dispositif de contrôle commande d'un moteur à combustion interne, **caractérisé par** des moyens de mise en ouvre d'un procédé selon l'une quelconque des revendications précédentes.
